# EUROPÄISCHE PATENTANMELDUNG

(11) **EP 3 961 182 A1**
(43) Veröffentlichungstag der Anmeldung: **02.03.2022**
(21) Anmeldenummer: 21185789.1
(22) Anmeldetag: 15.07.2021
(51) Int. Cl.: G01M 17/007

(54) **KRAFTFAHRZEUGPRÜFSTAND ZUR MONTAGE IN EINEM FUNDAMENT**

(30) Priorität: 26.08.2020 DE 102020210796
(71) Anmelder: MAHA Maschinenbau Haldenwang GmbH & Co. KG, 87490 Haldenwang (DE)
(72) Erfinder: HASEL, Gerhard, 87763 Lautrach (DE); SCHADE, Sebastian, 86956 Schongau (DE); HERB, Stefan, 87487 Wiggensbach (DE)
(74) Vertreter: MERH-IP Matias Erny Reichl Hoffmann Patentanwälte PartG mbB

(57) **Zusammenfassung**

Die vorliegende Erfindung betrifft einen Kraftfahrzeugprüfstand (1) zur Montage in einem Fundament mit mindestens einem Prüfstandrahmen (2) und mindestens einer Grundplatte (3). Der Prüfstandrahmen (2) kann mindestens eine Aufnahmeplatte (21a, 21b) umfassen, die mindestens einen Stellfuß (22) aufnehmen kann, mit dem der Kraftfahrzeugprüfstand (1) im montierten Zustand höhenverstellbar ist. Zudem kann die Aufnahmeplatte (21a, 21b) anstatt des Stellfußes (22) mindestens eine Wägezelle (24a, 24b) aufnehmen, mit der ein Fahrzeuggewicht ermittelt werden kann.

## Beschreibung

Die vorliegende Erfindung betrifft einen Kraftfahrzeugprüfstand zur Montage in einem Fundament, der mindestens einen Prüfstandrahmen mit mindestens einer Grundplatte und mindestens eine Aufnahmeplatte umfasst. Die Aufnahmeplatte ist dazu eingerichtet mindestens einen Stellfuß aufzunehmen, mit dem der Kraftfahrzeugprüfstand im montierten Zustand höhenverstellbar ist, und/oder mindestens eine Wägezelle aufzunehmen, mit der ein Fahrzeuggewicht ermittelt werden kann.

Zur Montage herkömmlicher Kraftfahrzeugprüfstände muss die Tiefe des Fundaments sehr genau an die Höhe des Prüfstandrahmens angepasst werden, damit dieser bündig mit dem Boden des Prüfstandsgebäudes abschließt. Zudem muss das Fundament vollständig eben sein, da eine geringe Schieflage des Kraftfahrzeugprüfstands bereits zu Messungenauigkeiten führt. Dies erfordert beim Austausch eines Kraftfahrzeugprüfstands gegebenenfalls umfangreiche Anpassungen am Fundament. Kleinere Höhendifferenzen und Unebenheiten des Fundaments werden bisher durch Unterlegen von Adapterplatten ausgeglichen. Dazu muss jedoch der Rollensatz des Kraftfahrzeugprüfstands während der Höhenanpassung mehrmals angehoben werden. Dies stellt aufgrund des hohen Gewichts des Rollensatzes einen erheblichen Aufwand dar.

Es ist eine Aufgabe der vorliegenden Erfindung einen Fahrzeugprüfstand bereitzustellen, der flexibel und einfach an unterschiedliche Montagerandbedingungen und Messaufgaben angepasst werden kann.

Die Aufgabe wird von der Erfindung gemäß den unabhängigen Patentansprüchen gelöst. Weitere bevorzugte Weiterentwicklungen der Erfindung sind in den abhängigen Patentansprüchen beschrieben.

Der erfindungsgemäße Kraftfahrzeugprüfstand (im Folgenden auch kurz "Prüfstand") zur Montage in einem Fundament kann mindestens einen Prüfstandrahmen mit mindestens einer Grundplatte und mindestens eine Aufnahmeplatte umfassen. Bevorzugt handelt es sich bei dem Kraftfahrzeugprüfstand um einen Bremsenprüfstand zur Ermittlung der Bremskraft an den einzelnen Rädern eines Kraftfahrzeugs. Das Fundament bezeichnet eine rechteckige Grube/Vertiefung im Boden des Prüfstandsgebäudes, in die der Prüfstand eingelassen wird und deren Untergrund diesen trägt. Der Prüfstand kann alternativ auch überflur (d.h. auf dem [Fuß- oder Hallen-]Boden) montiert werden. Für diese Anwendunggibt es Auf- und Abfahr-Rampen, die vor und hinter dem Prüfstand installiert werden können.

Bevorzugt kann der Prüfstandrahmen rechteckig sein und an jeder Ecke eine Aufnahmeplatte aufweisen. Das Fundament und der Prüfstandrahmen können bevorzugt eine geringere Ausdehnung in Längsrichtung (y-Richtung) als in Querrichtung (x-Richtung) des Prüfstands aufweisen. Unter der Längsrichtung (y-Richtung) des Prüfstands soll dabei die Richtung verstanden werden, die der Längsrichtung eines auf dem Prüfstand befindlichen Fahrzeugs entspricht. Die Aufnahmeplatte kann dazu eingerichtet sein mindestens einen Stellfuß aufzunehmen, mit dem der Kraftfahrzeugprüfstand im montierten Zustand höhenverstellbar ist. Der Prüfstand kann bevorzugt zwei Grundplatten enthalten, die an in Querrichtung (x-Richtung) äußeren Endabschnitten des Prüfstands unterhalb von jeweils zwei der vier Aufnahmeplatten in Längsrichtung (y-Richtung) angeordnet sind. Alternativ ist auch eine einzelne durchgehende Grundplatte denkbar, die unter allen vier Aufnahmeplatten und somit unterhalb des kompletten Prüfstandrahmens angeordnet ist. Ebenso sind mehr als zwei Grundplatten möglich, die an verschiedenen Stellen unterhalb des Prüfstandrahmens angeordnet sein können. Unter dem montierten Zustand des Kraftfahrzeugprüfstands soll verstanden werden, dass der Prüfstand inklusive aller Bauteile wie Rollensatz, Antriebsmotoren etc. in dem Fundament platziert ist. Der Begriff "höhenverstellbar" bezeichnet die Möglichkeit den Prüfstand in dem Fundament in vertikaler Richtung (z-Richtung) nach oben und/oder nach unten zu bewegen.

Mit Hilfe des Stellfußes kann die vertikale Position des Prüfstands ohne Anheben der Rolleneinheit an die Tiefe des Fundaments angepasst werden. Zudem können Unebenheiten im Boden des Fundaments durch die entsprechende Einstellung der Stellfüße einfach ausgeglichen werden. Dies ermöglicht eine einfache Anpassung des Kraftfahrzeugprüfstands an unterschiedliche Fundamente und erleichtert/beschleunigt die Prüfstandmontage.

Gemäß einem Aspekt kann der Stellfuß auf der Grundplatte aufliegen und einen vorbestimmten maximalen Verstellweg aufweisen. Bevorzugt kann die Grundplatte aus hochfestem Stahl, wie beispielsweise XAR(500) oder Hardox(500), bestehen oder diese aufweisen und auf dem Boden des Fundaments aufliegen.

Dadurch wird die über den Stellfuß auf das Fundament übertragene Gewichtskraft gleichmäßig verteilt und ein "Eindrücken/Eingraben" des Stellfußes in den Untergrund vermieden. Bevorzugt weist der Stellfuß einen maximalen Verstellwegvon 245mm bis 300mm (Gesamthöhe) auf (d.h. einen Verstellweg von bevorzugt mehr als 50 mm, bspw. 55mm). Dies ermöglicht die Anpassung des Kraftfahrzeugprüfstands an alle gängigen Fundamentmaße.

Gemäß einem weiteren Aspekt kann die Grundplatte mindestens einen senkrecht ausgerichteten Bolzen aufweisen, auf dem ein Führungsrohr in vertikaler Richtung (z-Richtung) verschiebbar gelagert ist. Das Führungsrohr kann mit dem Prüfstandrahmen fest verbunden sein. Bevorzugt kann das Führungsrohr mit dem Prüfstandrahmen verschweißt sein. Durch die Lagerung des Prüfstandrahmens mittels des Führungsrohrs auf dem senkrecht ausgerichteten Bolzen kann die Position des Kraftfahrzeugprüfstands in Längs- und Querrichtung (in x-und y-Richtung) im Fundament festgelegt werden, während die Position des Prüfstands in vertikaler Richtung (z-Richtung) mittels der Stellfüße festgelegt werden kann. Während des Transports und der Montage des Kraftfahrzeugprüfstands können der Prüfstandrahmen und die Grundplatte über eine Fixierschraube, die in den senkrecht ausgerichteten Bolzen eingeschraubt werden kann, verbunden werden.

Gemäß einem weiteren Aspekt kann der mindestens eine Stellfuß eine Spindel mit einem Schraubenkopf umfassen, wobei im montierten Zustand des Kraftfahrzeugprüfstands, der Schraubenkopf am oberen Ende der Spindel angeordnet sein kann. Dieser Aufbau des Stellfußes bietet eine kompakte und einfache Einstellmöglichkeit. Die Anordnung des Schraubenkopfs am oberen Ende der Spindel ermöglicht eine Höhenverstellung im montierten Zustand des Prüfstands, da der Schraubenkopf von oben zugänglich ist und somit der Prüfstand nicht angehoben werden muss.

Gemäß einem weiteren Aspekt kann der Schraubenkopf einen Außensechskant aufweisen. Dabei kann eine Schlüsselweite des Schraubenkopfs der Spindel gleich einem Gewindedurchmesser der Spindel sein. Alternativ kann die Schlüsselweite des Schraubenkopfs kleiner als der Gewindedurchmesser der Spindel sein. Dies ist möglich, da die Spindel lediglich eine Einstellfunktion übernimmt und der Schraubenkopf keine Klemmkraft übertragen muss. Da die Schlüsselweite des Schraubenkopfs kleiner oder gleich dem Gewindedurchmesser sein kann, erfordert der Schraubenkopf im Vergleich zur Spindel keine größere Aussparung im Prüfstandrahmen, so dass dieser eine geringe Breite aufweisen kann und somit den Einbauraum für die weiteren Bauteile (Rollensatz, Antriebsmotoren etc.) nicht einschränkt. Alternativ oder zusätzlich ist auch die Verwendung eines Schraubenkopfs mit Innensechskant oder Torx möglich.

Besonders bevorzugt können die Spindeln aus einer schwarzen 8.8 Schraube hergestellt werden, da diese eine geeignete Materialgüte und Gewinde aufweisen. Grundsätzlich kann für die Fertigung auch ein Rundmaterial genutzt werden. Die Oberfläche kann bevorzugt anschließend gegen Korrosion geschützt werden, vorzugsweise durch Vernickeln oder Verzinken. Für Maschinen-Schrauben sind folgende Werkstoffe gängig: 37Cr4, 41Cr4, 42CrMo4, 34CrNiMo6; 30CrNiMo8.

Gemäß einem weiteren Aspekt kann die Spindel in ihrem Gewinde in Längsachse eine Nut mit einem Kunststofffaden aufweisen. Der Kunststofffaden stellt ein Sicherungselement dar, durch das die eingestellte Höhe jedes Stellfußes sicher fixiert und ein Verdrehen der Spindel aufgrund von Vibrationen verhindert werden kann.

Gemäß einem weiteren Aspekt kann die mindestens eine Aufnahmeplatte zudem dazu eingerichtet sein mindestens eine Wägezelle aufzunehmen, mit der ein Fahrzeuggewicht ermittelt werden kann. In diesem Fall kann der Kontakt zwischen Stellfuß und Grundplatte durch ein Herausdrehen des Stellfußes unterbrochen werden, so dass der Kraftfahrzeugprüfstand sich in der Lagerung auf dem senkrecht ausgerichteten Bolzen in vertikaler Richtung bewegen kann. Steht nun eine Achse eines Kraftfahrzeugs auf dem Prüfstand auf, bewegt sich dieser über das Führungsrohr des Prüfstandrahmens auf dem senkrecht ausgerichteten Bolzens nach unten und die Wägezellen werden belastet, so dass die einzelnen Achslasten und das Fahrzeuggesamtgewicht ermittelt werden kann.

Ein erfindungsgemäßer Kraftfahrzeugprüfstand zur Montage in einem Fundament kann mindestens eine Grundplatte und mindestens eine Aufnahmeplatte umfassen. Bevorzugt handelt es sich bei dem Kraftfahrzeugprüfstand um einen Bremsenprüfstand zur Ermittlung der Bremskraft an den einzelnen Rädern eines Kraftfahrzeugs. Bevorzugt kann der Prüfstandrahmen rechteckig sein und an jeder Ecke eine Aufnahmeplatte aufweisen. Die Aufnahmeplatte kann dazu eingerichtet sein mindestens eine Wägezelle aufzunehmen, mit der ein Fahrzeuggewicht ermittelt werden kann. Die Wägezellen ermöglichen es, die einzelnen Achslasten und das Gesamtgewichts des zu untersuchenden Fahrzeugs zu ermitteln. Die Aufnahmeplatte ist somit ein flexibles Bauteil des Prüfstandrahmens, das sowohl zur Aufnahme eines Stellfußes als auch zur Aufnahme einer Wägezelle verwendet werden kann.

Die Grundplatte kann mindestens einen senkrecht ausgerichteten Bolzen aufweisen, auf dem ein Führungsrohr in vertikaler Richtung (z-Richtung) verschiebbar gelagert ist. Dabei kann das Führungsrohr mit dem Prüfstandrahmen fest verbunden sein. Bevorzugt kann das Führungsrohr mit dem Prüfstandrahmen verschweißt sein. Diese verschiebbare (schwimmende) Lagerung des Prüfstandrahmens auf dem senkrecht ausgerichteten Bolzen der Grundplatte ermöglicht zum einen die Fixierung des Kraftfahrzeugprüfstands im Fundament in Längs- und Querrichtung (in x- und y-Richtung) und zum anderen die Messung der Achslasten bzw. des Gesamtgewichts des Fahrzeugs. Steht eine Achse eines Kraftfahrzeugs auf dem Prüfstand auf, bewegt sich dieser über das Führungsrohr des Prüfstandrahmens auf dem senkrecht ausgerichteten Bolzens nach unten und die Wägezellen werden belastet. Während des Transports und der Montage des Kraftfahrzeugprüfstands können der Prüfstandrahmen und die Grundplatte über eine Fixierschraube, die in den senkrecht ausgerichteten Bolzen eingeschraubt werden kann, verbunden werden.

Gemäß einem Aspekt kann die mindestens eine Wägezelle auf der Grundplatte aufliegen und mit der Aufnahmeplatte verschraubt sein. Bevorzugt kann die Grundplatte aus hochfestem/verschleißfesten Stahl, wie beispielsweise XAR500 oder Hardox500 bestehen oder diesen umfassen, und auf dem Boden des Fundaments aufliegen. Dadurch wird die über die Wägezelle auf das Fundament übertragene Gewichtskraft gleichmäßig verteilt und ein Eindrücken der Wägezelle in den Untergrund vermieden. Bei vorbekannten Prüfständen wurde für derartige Unterlagen normales Stahlblech (S235 oder S355) verwendet und nur an den gefährdeten Stellen eine gehärtete Platte aufgeklebt. Bei LKW-Prüfständen mit Achslasten bis 20t wurden separate, gehärtete Platten unter die Waagedosen gelegt.

Gemäß einem weiteren Aspekt kann die Befestigung der Grundplatte am/im Fundament im montierten Zustand des Kraftfahrzeugprüfstands erfolgen. Bevorzugt kann die Grundplatte im montierten Zustand von oben frei zugänglich sein, so dass benötigte Löcher für die Bodenbefestigung von oben gebohrt werden können, ohne den Prüfstand anzuheben und ohne Abdeckungen entfernen zu müssen. Weiter können Dübel oder Betonschrauben für die Befestigung der Grundplatte von oben durchgesteckt und angezogen werden können, ohne den Prüfstand anzuheben und ohne Abdeckungen entfernen zu müssen.

Ein erfindungsgemäßes Verfahren zur Montage des oben beschriebenen Kraftfahrzeugprüfstands kann die folgenden Schritte umfassen:
- Montieren aller Bauteile des Kraftfahrzeugprüfstands in einem Prüfstandrahmen;
- Positionieren des (bevorzugt vollständig montierten) Kraftfahrzeugprüfstands in einem Fundament oder Überflur;
- Einstellen der vertikalen Position des Kraftfahrzeugprüfstands in dem Fundament mit mindestens einem Stellfuß, wobei ein Schraubenkopf zum Verstellen einer Spindel des Stellfußes von oben zugänglich ist; und
- Verschrauben des Kraftfahrzeugprüfstands an dem Fundament.

Da die Positionen der Verschraubungen des Prüfstands am Fundament so gewählt sind, dass sie im montierten Zustand von oben zugänglich sind und die Höhenanpassung des Prüfstands ebenfalls von oben erfolgt, können alle Bauteile im Prüfstandrahmen vormontiert werden. Zudem muss der vormontierte Prüfstand nur einmal in das Fundament eingesetzt werden und zur Einstellung der vertikalen Position nicht nochmals angehoben werden. Dies führt zu einer enormen Zeitersparnis bei der Montage des Kraftfahrzeugprüfstands im Prüfstandgebäude und somit zu einer Reduzierung der Ausfallzeiten im Prüfstandbetrieb.

Zusammenfassend ermöglichen der beanspruchte Kraftfahrzeugprüfstand sowie das zugehörige Verfahren eine einfache und flexible Montage sowie den Einsatz von Gleichteilen für unterschiedliche Funktionen. Der Prüfstand kann vor seiner Positionierung im Fundament vollständig vormontiert werden, d.h. alle Bauteile wie Rollensatz, Antriebsmotoren etc. können bereits an den Prüfstandrahmen montiert werden bevor dieser in das Fundament eingelassen wird. Dies verkürzt die Montagezeiten im Prüfstandgebäude erheblich, so dass einem Prüfstandbetreiber im Falle eines Prüfstandaustauschs nur geringe Ausfallzeiten entstehen.

Im Folgenden werden verschiedene Beispiele der vorliegenden Erfindung detailliert unter Bezugnahme auf die Figuren beschrieben. Gleiche bzw. ähnliche Elemente in den Figuren werden hierbei mit gleichen Bezugszeichen bezeichnet. Die vorliegende Erfindung ist jedoch nicht auf die beschriebenen Ausführungsmerkmale begrenzt, sondern umfasst weiterhin Modifikationen von Merkmalen der beschriebenen Beispiele und Kombination von Merkmalen verschiedener Beispiele im Rahmen des Schutzumfangs der unabhängigen Ansprüche.

### Es zeigen

Fig. 1 eine beispielhafte Darstellung einer Außenansicht des beanspruchten Kraftfahrzeugprüfstands;
Fig. 2a, 2b ein Beispiel für eine Bauteilanordnung zur Höhenverstellung des beanspruchten Kraftfahrzeugprüfstands;
Fig. 3 eine beispielhafte Darstellung eines Stellfußes zur Höhenverstellung des beanspruchten Kraftfahrzeugprüfstands;
Fig. 4 eine Draufsicht auf den Prüfstandrahmen des in den Fig. 2a, 2b gezeigten beispielhaften Kraftfahrzeugprüfstands; und
Fig. 5a, 5b ein Beispiel für eine Bauteilanordnung zur Ermittlung der Achslasten/des Gewichts eines Fahrzeugs auf dem beanspruchten Kraftfahrzeugprüfstand.

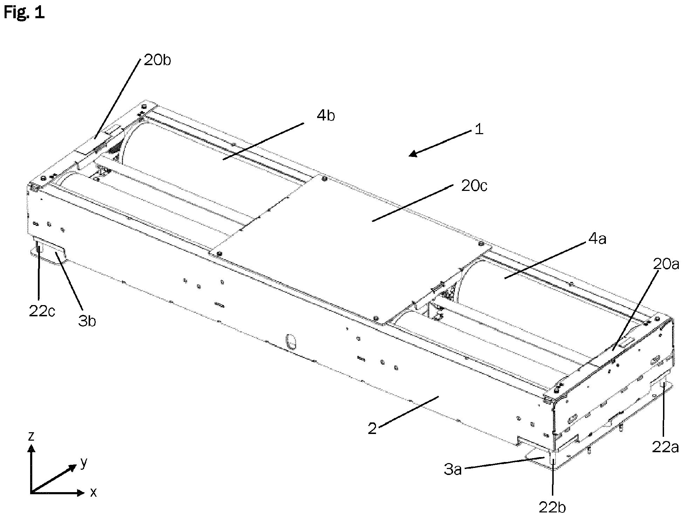

In Fig. 1 ist beispielhaft eine Außenansicht des beanspruchten Kraftfahrzeugprüfstands dargestellt. Gemäß der Darstellung umfasst der gezeigte Kraftfahrzeugprüfstand 1 einen Prüfstandrahmen 2, der auf seiner Oberseite zwei äußere Abdeckungen 20a, 20b und eine mittlere Abdeckung 20c aufweist. In dem Prüfstandrahmen 2 sind Rollensätze 4a, 4b montiert, die von Elektromotoren (nicht dargestellt) angetrieben werden. Diese Motoren befinden sich unterhalb der mittleren Abdeckung 20c. An der Unterseite des Rahmens sind an dessen Ecken untere Endabschnitte von Stellfüßen 22a-22c erkennbar, die auf Grundplatten 3a, 3b aus hochfestem Stahl aufstehen. Unter den äußeren Abdeckungen 20a, 20b befinden sich Aussparungen (siehe nachfolgende Figuren), welche den Zugang zu den Stellfüßen 22a-22c ermöglichen. Somit kann die vertikale Position des Kraftfahrzeugprüfstands 1 im vollständig montierten Zustand (fein)justiert werden. Da die Stellfüße 22a-22c auf den Grundplatten 3a, 3b aufstehen, wird die auf die Stellfüße 22a-22c wirkende Gewichtskraft gleichmäßig über die Fläche der Grundplatten 3a, 3b auf das Fundament übertragen. Dies verhindert ein "Eingraben" der Stellfüße in die Oberfläche des Fundamentbodens.

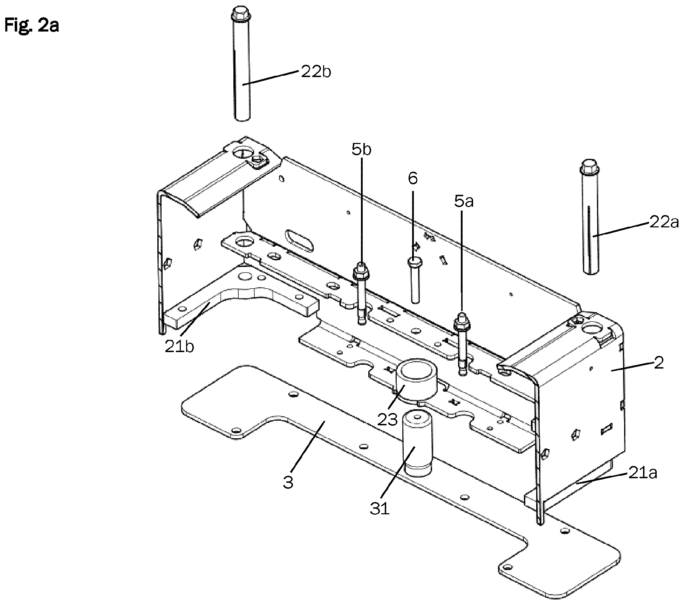

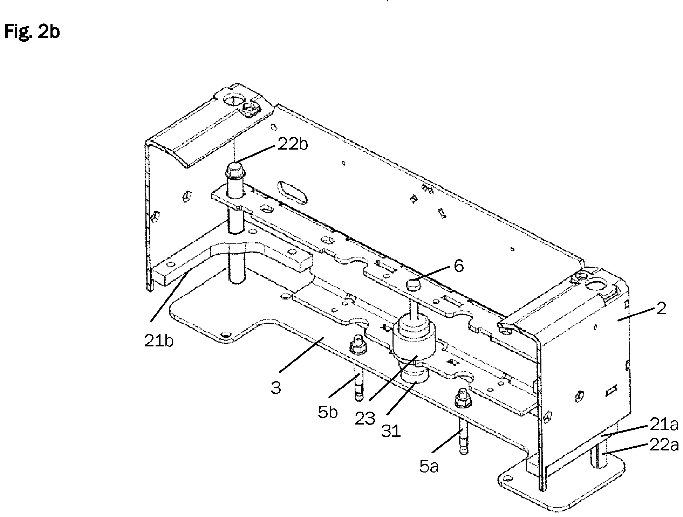

Die Figuren 2a und 2b zeigen ein Beispiel für eine Bauteilanordnung zur Höhenverstellung des beanspruchten Kraftfahrzeugprüfstands 1 anhand einer Innenansicht eines äußeren Abschnitts des Kraftfahrzeugprüfstands 1. Dabei zeigt Fig. 2a die einzelnen Bauteile des Prüfstandausschnitts in einer Explosionszeichnung und Fig. 2b den Prüfstandausschnitt in einer Zusammenbauzeichnung.

Der Prüfstandrahmen 2 weist in seinen Ecken jeweils eine Aufnahme 21a, 21b auf, in die jeweils ein Stellfuß 22a, 22b eingeschraubt ist, der auf der Grundplatte 3 aufsteht. Die Aufnahmen 21a, 21b sind fest/unlösbar mit dem Prüfstandrahmen 2 verbunden. Beispielsweise können die Aufnahmen 21a, 21b an den Prüfstandrahmen geschweißt sein. Mit Hilfe von (Fein-)Gewinden in den Aufnahmen 21a, 21b kann der Prüfstandrahmen 2 mit den darin enthaltenen Bauteilen (Rollensätze, Antriebsmotoren (nicht dargestellt)) in vertikaler Richtung (z-Richtung) positioniert werden. Die Grundplatte 3 kann beispielsweise mit Bolzenankern 5a, 5b im Boden des Fundaments festgeschraubt werden. Auf der Grundplatte 3 befindet sich ein senkrecht ausgerichteter Bolzen 31, der fest/unlösbar mit der Grundplatte 3 verbunden ist. Der Bolzen 31 kann beispielsweise mit der Grundplatte 3 verschweißt sein. Auf diesem Bolzen 31 ist der Prüfstandrahmen 2 über ein Führungsrohr 23 vertikal bewegbar gelagert. Das Führungsrohr 23 ist fest/unlösbar mit dem Prüfstandrahmen 2 verbunden, beispielsweise kann es mit diesem verschweißt sein. Diese Lagerung fixiert die Position des Prüfstandrahmens 2 in Längs- und Querrichtung (x- und y-Richtung), erlaubt jedoch eine Bewegung in vertikaler Richtung (z-Richtung), so dass die vertikale Position des Prüfstands 1 allein durch die Einstellung der Stellfüße 22a, 22b bestimmt werden kann. Während des Transports und der Montage des Prüfstands 1 ist der Prüfstandrahmen mittels einer Fixierschraube 6, die in den Bolzen 31 eingeschraubt werden kann, mit der Grundplatte 3 verbunden, um den Prüfstandrahmen 2 zu der Grundplatte 3 ausrichten und den Kraftfahrzeugprüfstand 1 als vollständige Einheit in dem Fundament montieren zu können.

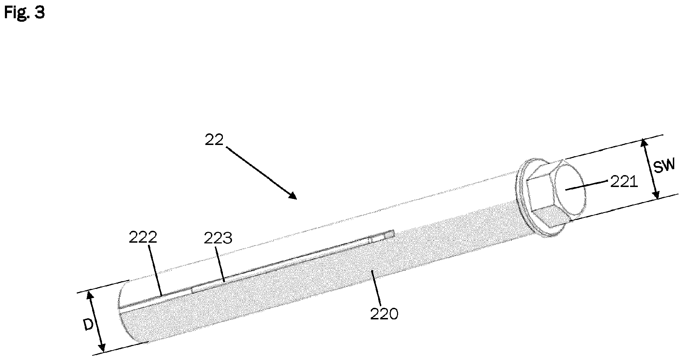

In Fig. 3 ist ein Beispiel für einen Stellfuß 22 gezeigt, mit dem die vertikale Position des beanspruchten Kraftfahrzeugprüfstands 1 eingestellt werden kann. Der Stellfuß 22 umfasst eine Spindel 220 mit einem Schraubenkopf 221, der einen Außensechskant aufweist. Es wird deutlich, dass die Schlüsselweite SW des Außensechskants nicht größer als der Gewindedurchmesser D der Spindel ist. Dadurch erfordert der Schraubenkopf 221 im Vergleich zur Spindel 220 keine größere Aussparung im Prüfstandrahmen 2, so dass dieser eine geringe Breite aufweisen kann und somit den Einbauraum für die zu montierenden Bauteile (Rollensätze, Antriebsmotoren etc.) nicht einschränkt. Die Spindel 220 weist in ihrem Gewinde in Längsachse eine Nut 222 mit einem Kunststofffaden 223 auf. Der Kunststofffaden 223 stellt ein Sicherungselement dar, durch das die eingestellte Höhe des Stellfußes 22 sicher fixiert und ein Verdrehen der Spindel 220 aufgrund von Vibrationen verhindert werden kann. Der dargestellte Stellfuß 22 bietet eine kompakte und einfache Möglichkeit einen Kraftfahrzeugprüfstand 1 in einem Fundament in vertikaler Richtung derart zu justieren, dass die Oberfläche des Prüfstandrahmens vollständig bündig mit dem Boden des Prüfstandgebäudes abschließt. Dies ermöglicht eine vorschriftmäßige und genaue Durchführung der jeweiligen Messaufgabe, wie beispielsweise die Messung der Bremskraft an den einzelnen Rädern eines Fahrzeugs.

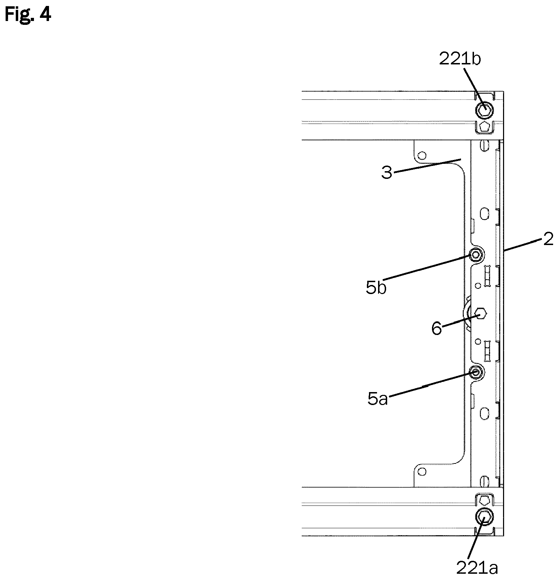

In Fig. 4 ist eine Draufsicht auf einen äußeren Abschnitt des Prüfstandrahmens 2 des Kraftfahrzeugprüfstands 1 dargestellt. Man kann erkennen, dass sowohl die Schraubenköpfe 221a, 221b der Stellfüße 22a, 22b als auch die Schraubenköpfe der Bolzenanker 5a, 5b durch die entsprechenden Aussparungen im Prüfstandrahmen 2 einfach von oben zugänglich sind. Zudem wird deutlich, dass durch die geringe Schlüsselweite der Schraubenköpfe 221a, 221b, der Durchmesser der benötigten Aussparung sehr gut in der üblichen Rahmenbreite Platz findet und die Stabilität des Prüfstandrahmens 2 nicht beeinträchtigt wird.

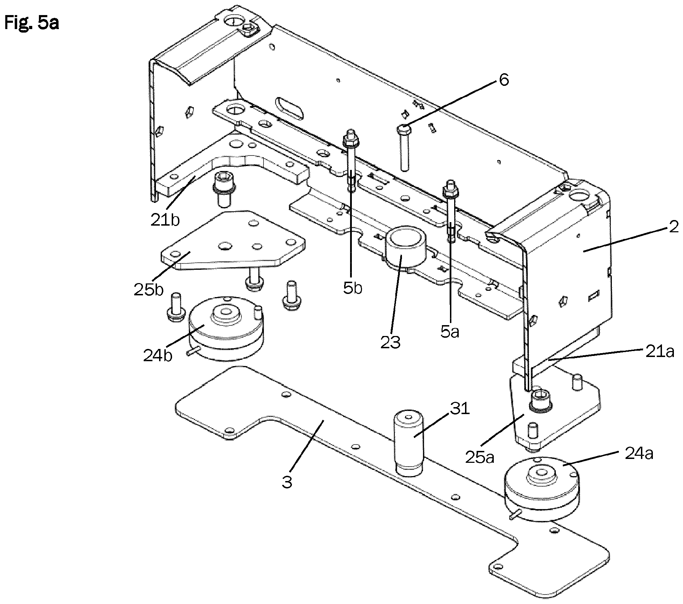

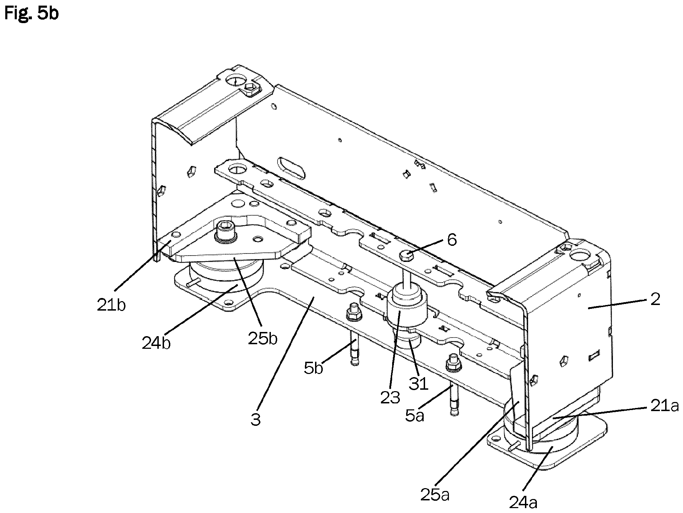

Die Figuren 5a und 5b zeigen ein Beispiel zur Ermittlung der Achslasten/des Gewichts eines Fahrzeugs auf dem beanspruchten Kraftfahrzeugprüfstand 1 anhand einer Innenansicht eines äußeren Abschnitts des Kraftfahrzeugprüfstands 1. Dabei zeigt Fig. 5a die benötigten Bauteile in einer Explosionszeichnung und Fig. 5b die Bauteilanordnung in einer Zusammenbauzeichnung.

Analog zu dem in den Figuren 2a und 2b dargestellten Beispiel, umfasst der Prüfstandrahmen 2 in seinen Ecken jeweils eine Aufnahme 21a, 21b, die im vorliegenden Fall eine Wägezelle 24a, 24b aufnimmt. Die Aufnahmen 21a, 21b sind fest/unlösbar mit dem Prüfstandrahmen 2 verbunden. Beispielsweise können die Aufnahmen 21a, 21b an den Prüfstandrahmen geschweißt sein. Die Wägezelle 24a, 24b ist mit Hilfe einer Adapterplatte 25a, 25b mit der Aufnahme 21a, 21b verschraubt und liegt auf der Grundplatte 3 auf. Die Grundplatte 3 kann beispielsweise mit Bolzenankern 5a, 5b im Boden des Fundaments festgeschraubt werden. Wie in dem in Fig. 2 dargestellten Beispiel, befindet sich auf der Grundplatte 3 ein senkrecht ausgerichteter Bolzen 31, der fest/unlösbar mit dieser verbunden ist. Der Bolzen 31 kann beispielsweise mit der Grundplatte 3 verschweißt sein. Auf diesem Bolzen 31 ist der Prüfstandrahmen 2 über ein Führungsrohr 23 vertikal bewegbar gelagert. Das Führungsrohr 31 ist fest/unlösbar mit dem Prüfstandrahmen 2 verbunden, beispielsweise kann es mit diesem verschweißt sein. Diese Lagerung fixiert die Position des Prüfstandrahmens 2 in Längs- und Querrichtung (x- und y-Richtung) erlaubt jedoch eine Bewegung in vertikaler Richtung (z-Richtung). Im vorliegenden Fall wird die vertikale Position des Prüfstandrahmens 2 nicht durch Stellfüße 22a, 22b fixiert, sondern der Prüfstandrahmen 2 liegt auf den Wägezellen 24a, 24b auf und ist in vertikaler Richtung (z-Richtung bewegbar (schwimmende Lagerung). Steht eine Achse eines Kraftfahrzeugs auf dem Prüfstand 1 auf, bewegt sich dieser über das Führungsrohr 23 des Prüfstandrahmens 2 auf dem senkrecht ausgerichteten Bolzens 31 nach unten und die Wägezellen 24a, 24b werden belastet. Somit können sowohl die einzelnen Achslasten als auch das Gesamtgewicht des Fahrzeugs ermittelt werden. Maßabweichungen und Unebenheiten im Fundament des Prüfstands 1 werden in diesem Fall mittels Adapterplatten ausgeglichen.

Es ist ebenso möglich, neben den Wägezellen 24a, 24b auch Stellfüße 22a, 22b in den Aufnahmen 21a, 21b vorzusehen, die für den Fall, dass ein Fahrzeuggewicht ermittelt werden soll, nicht auf der Grundplatte 3 aufstehen, sondern lediglich im Gewinde der Aufnahmeplatte 21a, 21b fixiert sind. Wird keine Wiegefunktion benötigt, kann bei Bedarf eine Feinjustierung der vertikalen Prüfstandposition über die Stellfüße 22a, 22b erfolgen.

Während des Transports und der Montage des Prüfstands 1 ist der Prüfstandrahmen auch in diesem Fall mittels einer Fixierschraube 6, die in den Bolzen 31 eingeschraubt werden kann, mit der Grundplatte 3 verbunden, um den Prüfstandrahmen 2 zu der Grundplatte 3 ausrichten und den Kraftfahrzeugprüfstand 1 als vollständige Einheit in dem Fundament montieren zu können.

Zusammenfassend ist festzuhalten, dass der beanspruchte Kraftfahrzeugprüfstand flexibel und einfach an unterschiedliche Montagerandbedingungen und Messaufgaben angepasst werden kann. Es können gleiche Anbauteile für die Bereitstellung unterschiedlicher Funktionen genutzt werden, so dass der Fertigungsaufwand und die Bauteilverwaltung reduziert werden kann. Der Prüfstand kann vor seiner Platzierung im Fundament vollständig vormontiert werden, so dass die Montagezeiten im Prüfstandgebäude erheblich verkürzt werden können.

### Referenzzeichenliste:

- 1: Kraftfahrzeugprüfstand, Prüfstand
- 2: Prüfstandrahmen
- 3, 3a, 3b: Grundplatte
- 4a, 4b: Rollensatz
- 5a, 5b: Bolzenanker
- 6: Fixierschraube
- 20a, 20b, 20c: Abdeckplatten
- 21a, 21b: Aufnahme
- 22, 22a, 22c: Stellfuß
- 23: Führungsrohr
- 24a, 24b: Wägezelle
- 25a, 25b: Adapterplatte
- 220: Spindel
- 221, 221a, 221b: Schraubenkopf
- 222: Nut
- 223: Kunststofffaden

## Patentansprüche

1. Kraftfahrzeugprüfstand (1) zur Montage in oder auf einem Fundament mit
mindestens einem Prüfstandrahmen (2), und mindestens einer Grundplatte (3), wobei
der Prüfstandrahmen (2) mindestens eine Aufnahmeplatte (21a, 21b) umfasst, die dazu eingerichtet ist mindestens einen Stellfuß (22) aufzunehmen, mit dem der Kraftfahrzeugprüfstand (1) im montierten Zustand höhenverstellbar ist.

2. Kraftfahrzeugprüfstand (1) gemäß einem der vorangegangenen Ansprüche, wobei der Stellfuß (22) auf der Grundplatte (3) aufsteht, und einen vorbestimmten maximalen Verstellweg aufweist.

3. Kraftfahrzeugprüfstand (1) gemäß Anspruch 1, wobei die Grundplatte (3) mindestens einen senkrecht ausgerichteten Bolzen (31) aufweist auf dem ein Führungsrohr (23) in vertikaler Richtung verschiebbar gelagert ist, das mit dem Prüfstandrahmen (2) fest verbunden ist.

4. Kraftfahrzeugprüfstand (1) gemäß einem der vorangegangenen Ansprüche, wobei der mindestens eine Stellfuß (22) eine Spindel (220) mit einem Schraubenkopf (221) umfasst.

5. Kraftfahrzeugprüfstand (1) gemäß einem der vorangegangenen Ansprüche, wobei, im montierten Zustand des Kraftfahrzeugprüfstands (1), der Schraubenkopf (221) am oberen Ende der Spindel (220) angeordnet ist.

6. Kraftfahrzeugprüfstand (1) gemäß einem der vorangegangenen Ansprüche, wobei der Schraubenkopf (221) einen Außensechskant aufweist, und eine Schlüsselweite des Schraubenkopfs (221) gleich einem Gewindedurchmesser der Spindel (220) oder kleiner als der Gewindedurchmesser der Spindel (220) ist.

7. Kraftfahrzeugprüfstand (1) gemäß einem der vorangegangenen Ansprüche, wobei die Spindel (220) in ihrem Gewinde in Längsachse eine Nut (222) mit einem Kunststofffaden (223) aufweist.

8. Kraftfahrzeugprüfstand (1) gemäß einem der vorangegangenen Ansprüche, wobei die mindestens eine Aufnahmeplatte (21a, 21b) dazu eingerichtet ist mindestens eine Wägezelle (24a, 24b) aufzunehmen, mit der ein Fahrzeuggewicht ermittelt werden kann.

9. Kraftfahrzeugprüfstand (1) zur Montage in einem Fundament mit mindestens einem Prüfstandrahmen (2), und mindestens einer Grundplatte (3), wobei
der Prüfstandrahmen (2) mindestens eine Aufnahmeplatte (21a, 21b) umfasst, die dazu eingerichtet ist mindestens eine Wägezelle (24a, 24b) aufzunehmen, mit der ein Fahrzeuggewicht ermittelt werden kann, und
die Grundplatte (3) mindestens einen senkrecht ausgerichteten Bolzen (31) aufweist auf dem ein Führungsrohr (23) in vertikaler Richtung verschiebbar gelagert ist, das mit dem Prüfstandrahmen (2) fest verbunden ist.

10. Kraftfahrzeugprüfstand (1) gemäß Anspruch 8, wobei die mindestens eine Wägezelle (24a, 24b) auf der Grundplatte (3) aufliegt und mit der Aufnahmeplatte (21a, 21b) verschraubt ist.

11. Kraftfahrzeugprüfstand (1) gemäß einem der vorangegangenen Ansprüche, wobei die Befestigung der Grundplatte (3) am Fundament im montierten Zustand des Kraftfahrzeugprüfstands (1) erfolgt.

12. Verfahren zur Montage eines Kraftfahrzeugprüfstands (1) gemäß zumindest einem der vorangegangenen Ansprüche 1 bis 8 umfassend die folgenden Schritte:
- Positionieren des montierten Kraftfahrzeugprüfstands (1) in einem Fundament;
- Einstellen der vertikalen Position des Kraftfahrzeugprüfstands (1) in dem Fundament mit mindestens einem Stellfuß (22a, 22b), wobei ein Schraubenkopf (221) zum Verstellen einer Spindel (220) des Stellfußes (22a, 22b) zumindest von oben zugänglich ist; und
- Verschrauben des Kraftfahrzeugprüfstands (1) an dem Fundament.
